# FASCICULE DE BREVET EUROPEEN

(11) **EP 0 660 905 B1**
(45) Date de publication et mention de la délivrance du brevet: **20.08.1997**
(21) Numéro de dépôt: 94920499.4
(22) Date de dépôt: 21.06.1994
(51) Int. Cl.: F16D 13/64

(54) **DISQUE PORTE-GARNITURES, NOTTAMENT POUR VEHICULE AUTOMOBILE**
REIBEBELÄGE TRAGENDE SCHEIBE, INSBESONDERE FÜR KRAFTFAHRZEUGE
FRICTION LINING DISK, PARTICULARLY FOR MOTOR VEHICLES

(30) Priorité: 21.06.1993 FR 9307475; 14.07.1993 US 91060; 15.07.1993 EP 93401832; 09.11.1993 FR 9313341; 18.03.1994 WO PCT/FR94/00297
(43) Date de publication de la demande: 05.07.1995
(73) Titulaire: VALEO, 75848 Paris Cédex 17 (FR)
(72) Inventeur: THIRION DE BRIEL, Jacques, F-92700 Colombes (FR); VILLATA, Gino, I-14021 Buttigliera d'Asti (IT); BLARD, Michel, F-92130 Issy-les-Moulineaux (FR)
(74) Mandataire: Gamonal, Didier
(86) Numéro de dépôt international: FR9400752
(87) Numéro de publication internationale: WO9500769

(56) Documents cités:
- FR-A- 768 143
- FR-A- 786 598
- FR-A- 2 168 833
- GB-A- 459 006
- GB-A- 1 465 913
- US-A- 2 195 666
- US-A- 4 108 699

## Description

La présente invention concerne un disque porte-garnitures, pour support de garnitures de frottement, propre à la constitution d'un disque de friction, notamment pour véhicule automobile, du genre comportant une partie centrale et une partie périphérique fractionnées en pales radiales propres à recevoir les garnitures de frottement, chacune desdites pales se raccordant à ladite partie centrale par un pied et comportant au moins une zone plane de portée globalement parallèle au plan moyen de ladite partie centrale, pour contact avec l'une au moins desdites garnitures de frottement et fixation de celles-ci. Dans un disque de friction, ces garnitures s'étendent de part et d'autre de la partie périphérique.

Les disques de friction sont parfois sujets, en fonctionnement, à des vibrations désagréables constituant ce qu'il est usuel de désigner par broutement. Ce broutement peut se produire aussi bien à faible couple, lors d'une manoeuvre de parking, qu'à couple élevé lors d'un changement de vitesses sur route et que lors d'un démarrage en pente.

Les zones de portée ont parfois une étendue pas aussi grande que souhaitée, ce qui entraîne un phénomène d'incrustation, les garnitures de frottement s'affaissant à l'intérieur des creux existant entre deux portées d'appui d'une même pale.

Il en résulte un manque de flexibilité qui à charge maximale est responsable au moins pour partie du broutement.

En outre il se pose un problème de contact avec notamment le plateau de pression de l'embrayage.

En effet dans un embrayage, à chaque engagement de l'embrayage, les garnitures de frottement se trouvent progressivement serrées entre un plateau de pression et un plateau de réaction.

L'échauffement induit par le frottement conduit inévitablement à une mise en cône du plateau de pression, comme explicité par exemple dans le document US-A-2,902,130, et il en est de même, bien que dans une moindre mesure, pour le plateau de réaction.

Il en résulte que la zone suivant laquelle les garnitures de frottement sont soumises à la pression de l'un et de l'autre de ces plateaux se décale progressivement vers l'axe de l'ensemble, avec, pour conséquence, une usure inégale de ces garnitures de frottement et une réduction de leur efficacité (couple transmis moindre), voire même leur broutement.

Pour pallier ces inconvénients et résoudre ce problème, on a proposé dans le document EP-A-0 579 554, de créer au moins une première série de pales du type tripode présentant une zone centrale plane de portée et deux zones planes périphériques de portée à sa périphérie externe de part et d'autre de ladite zone centrale, décalée axialement par rapport aux zones de portées périphériques et à la partie centrale.

Dans une réalisation, ces pales alternent circonférentiellement avec une série de languettes.

Dans une autre réalisation, ces pales alternent circonférentiellement avec une seconde série de pales du type tripode à l'image de la première série.

Les pales tripodes, par leur zone centrale, servent à la fixation de l'une des garnitures de frottement, dans ce cas celle associée au plateau de pression de l'embrayage, tandis que les languettes ou la deuxième série de pales tripodes servent à la fixation de l'autre garniture de frottement, dans ce cas celle associée au plateau de réaction de l'embrayage.

Grâce à cette disposition les languettes ou les pales tripodes de la seconde série ont une élasticité suffisante pour suivre le mouvement de mise en cône du plateau de réaction, tandis que les pales tripodes de la première série suivent le mouvement de mise en cône du plateau de pression et ont de grandes surfaces de contact.

En outre, les phénomènes d'incrustation et de broutement sont diminués et les pales peuvent tourner à des vitesses de rotation plus élevées, ce qui supprime les sollicitations de flexion dans les pieds de pales sous l'effet de la force centrifuge.

Dans ce document, la fixation des garnitures de frottement est réalisée à l'aide d'une rangée de rivets implantés sur une même circonférence. Il en résulte que la zone centrale de la première série de pales tripodes est dotée d'une ouverture de passage d'un rivet formant organe de fixation.

Il en est de même des languettes ou de la zone centrale de la deuxième série de pales tripodes.

Pour les disques de friction de grande taille (grand diamètre) ou lorsque les garnitures de frottement sont minces en étant collées sur des clinquants rapportés par rivetage sur le disque porte-garnitures, il faut alors prévoir au moins deux rangées de rivets implantés sur des circonférences de diamètre différent.

Un problème d'implantation des trous de passage des organes de fixation se pose alors au niveau de la zone centrale des pales tripodes, car il faut éloigner les trous de passage des rivets d'une distance radiale notable pour une bonne fixation des garnitures de frottement et donc augmenter la taille radiale de la zone centrale.

De même lorsque l'on veut coller les garnitures sur les zones centrales, il est souhaitable d'augmenter la taille radiale des zones centrales pour soutenir intérieurement la garniture de frottement et améliorer la tenue du collage.

La présente invention a pour objet de répondre à ces souhaits et donc de créer, de manière simple et économique, de nouvelles pales tripodes permettant d'augmenter la taille radiale des zones centrales.

La zone centrale d'une pale tripode se raccordant à la partie centrale du disque porte-garnitures par un pied comportant au moins une zone inclinée sous forme d'un pli longitudinal perpendiculaire à l'axe de symétrie radial de la pale tripode, suivant l'invention, la zone centrale d'au moins certaines pales tripodes est prolongée centralement radialement vers l'intérieur à la faveur d'une découpe affectant ledit pli longitudinal.

Grâce à l'invention, contrairement aux solutions à languettes découpées décrites dans les documents FR-A-786 598 et FR-A-768 143 dans tous les cas on augmente la surface d'appui pour la garniture concernée et donc, la tenue de disque porte-garnitures à la force centrifuge. On peut implanter dans le même plan au moins deux trous de passage, espacés radialement l'un de l'autre, dans la zone centrale d'une pale tripode.

En effet, il suffit de doter le prolongement selon l'invention d'un trou supplémentaire pour passage d'un organe de fixation de la garniture de frottement. Ce prolongement souple en outre diminue les amorces de ruptures.

Ainsi on peut fixer la garniture de frottement (éventuellement fractionnée) concernée aux zones centrales de la première série de pales tripodes à l'aide d'au moins deux séries de rivets, ou d'autres organes de fixation espacés radialement l'un de l'autre.

Une bonne fixation de la garniture de frottement est ainsi réalisée. Cette garniture peut donc tourner à des vitesses de rotation élevées.

De même on peut fixer directement la garniture de frottement par collage sur les zones centrales.

En effet grâce au prolongement, on fixe ladite garniture localement sur une plus grande hauteur, qui favorise la tenue du collage. En outre on diminue les risques de pelage ou de décollement grâce au prolongement souple.

Bien entendu on peut conserver le trou de l'art antérieur et fixer la garniture par collage et rivetage.

Néanmoins, on appréciera que la solution uniquement collée est avantageuse car elle permet de réduire l'épaisseur des garnitures de frottement à une valeur utile. En effet il n'y a pas besoin de prévoir de surépaisseur comme dans une solution rivetée. L'inertie du disque de friction est donc réduite. La résistance des zones centrales est accrue du fait qu'il n'y a pas besoin de prévoir de trou de rivetage. Le disque de friction peut donc tourner à des vitesses de rotation encore plus élevées.

On appréciera que la disposition, selon l'invention, est économique car elle ne nécessite pas une profonde modification de l'outillage de fabrication du disque porte-garnitures.

En effet, il suffit d'effectuer la découpe à l'aide d'un outil simple et de prévoir ou non deux rangées de trous de passage. De plus le prolongement selon l'invention augmente la zone de portée de la garniture concernée sans nuire à la résistance mécanique du pli longitudinal.

Suivant une autre caractéristique, afin de conserver le maximum d'appui pour la garniture de frottement concernée avec des distances entre appui les plus faibles possible, on multiplie le nombre de pales.

Il en résulte que ces pales ont une largeur circonférentielle moindre et que l'on peut alors conformer les languettes précitées, qui sont globalement dans le plan de la partie centrale, en pales tripodes avec une zone centrale dans le plan de la partie centrale et deux zones périphériques de portée de part et d'autre de ladite zone centrale.

Ainsi, lors de l'écrasement élastique des garnitures de frottement, la garniture de frottement associée aux languettes trouve une réaction du fait de nouvelles zones de portées périphériques, qui sont propres à venir en appui contre l'autre garniture de frottement.

Les phénomènes d'incrustation sont ainsi réduits, l'usure de la garniture de frottement, associée aux languettes, étant mieux répartie. En outre, les phénomènes d'usure de la garniture de frottement, associée à la première série de pales, sont réduits puisque les zones de portées périphériques des languettes créent un appui supplémentaire. Pour l'autre garniture de frottement les usures sont plus régulières.

Bien entendu, on peut remplacer les languettes précitées par une deuxième série de pales tripodes.

En variante, certaines au moins desdites languettes présentent, à la faveur d'un pli de raccordement, au moins une zone de portée supplémentaire décalée axialement en direction des zones centrales de la première série de pales tripodes.

Les zones supplémentaires peuvent être situées à l'extrémité libre de la languette ou dans celle-ci à la faveur d'une découpe. Toute combinaison est possible.

Comme précédemment, les phénomènes d'incrustation sont réduits et l'usure de la garniture de frottement, associée aux languettes, est mieux répartie grâce à la zone de portée supplémentaire.

Suivant une caractéristique, la découpe affecte localement la zone centrale de la pale tripode afin de réduire les amorces de rupture au niveau du prolongement.

La description qui va suivre illustre l'invention en regard des dessins annexés dans lesquels :
- la figure 1 est une vue en coupe axiale d'un disque de friction équipé d'un disque porte-garnitures selon l'invention;
- la figure 2 est une vue partielle en élévation dudit disque porte-garnitures avec hachurage des zones de portée ; - les figures 3 à 10 sont des vues analogues à la figure 2 pour d'autres exemples de réalisation ;
- la figure 11 est une vue en coupe selon la ligne 11-11 de la figure 10.

Dans ces figures est illustré un disque porte-garnitures propre à la constitution d'un disque de friction pour véhicule automobile.

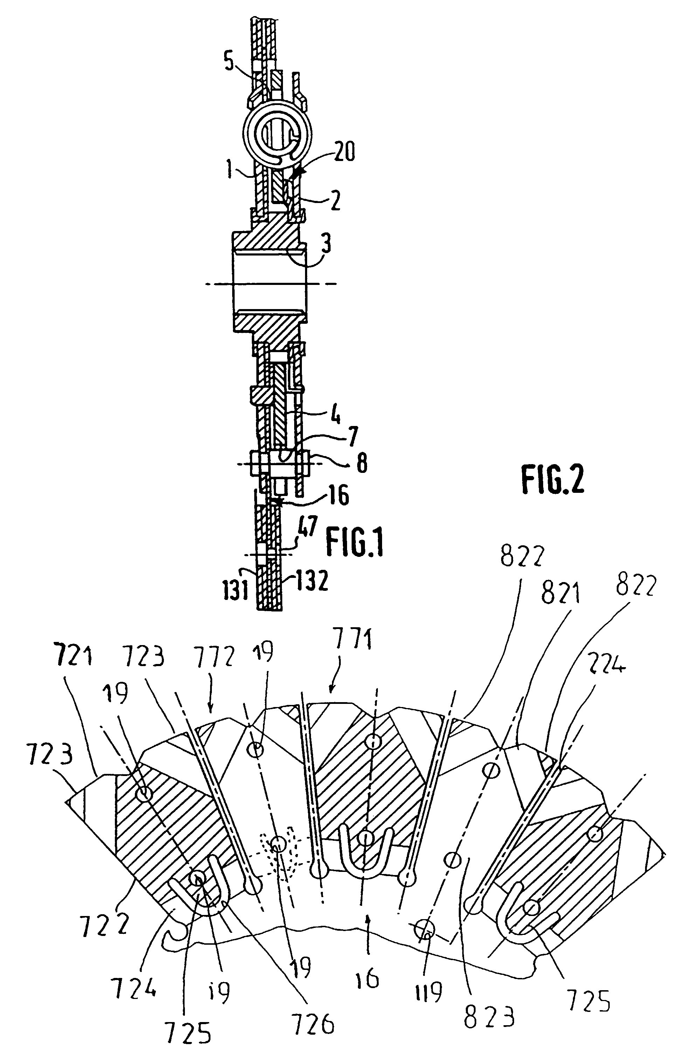

Ce disque (figure 1 et 2) comporte une partie centrale 16 et une partie périphérique fractionnée en pales radiales 771 alternant circonférentiellement, ici régulièrement, avec une série de languettes radiales 772 dans le plan de la partie centrale 16 du disque porte-garnitures. Dans cette figure, les pales 771 et les languettes 772 sont d'un seul tenant avec la partie centrale 16.

Comme décrit dans le document EP-A-0 579 554, chaque pale se raccorde à la partie centrale 16 par un pied longitudinal 724 et présente une zone centrale plane de portée 722 et deux zones planes périphériques de portée 723 à sa périphérie externe.

La zone centrale 722, de grande étendue, est décalée axialement par rapport à la partie centrale 16 et aux zones de portée périphériques 723.

La zone centrale 722 sert à la fixation d'une garniture de frottement 132, tandis que les languettes 772 servent à la fixation d'une autre garniture de frottement 131. A cet effet, les languettes 772 et les zones centrales 722 des pales 771 présentent ici des trous 19, pour fixation desdites garnitures 131,132 au disque porte-garnitures ici par l'intermédiaire de rivets 47 (figure 1).

Les trous 19 sont répartis sur deux circonférences de diamètre différents, selon une caractéristique de l'invention. En variante certains trous ne sont pas répartis sur lesdites circonférences pour formation d'un détrompeur. En variante on peut procéder à un collage ce qui permet de supprimer les trous et d'améliorer la résistance des pales de manière décrite ci-après.

Le disque porte-garnitures est équipé de deux garnitures de frottement annulaires 131,132 montées dos-à-dos, de part et d'autre de la partie centrale 16.

Ces garnitures de frottement sont ici du type organique en étant circonférentiellement continues et en étant renforcées par des fibres de verre, de "KEVLAR" (marque déposée) ou autres.

Dans un embrayage, les garnitures 131,132 sont normalement serrées entre les plateaux de pression et de réaction (non visibles) de l'embrayage solidaires en rotation du vilebrequin du moteur à combustion interne du véhicule automobile, tandis que le moyeu 3, grâce à son alésage interne cannelé, est lié en rotation avec l'arbre d'entrée de la boîte de vitesses.

Lors de la manoeuvre de l'embrayage, pour désengager celui-ci, on desserre les garnitures de frottement 131,132 en sorte qu'en position embrayage désengagé celles-ci ne sont pas en contact avec lesdits plateaux de pression et de réaction.

Lorsque l'on réengage l'embrayage les garnitures 131,132 sont serrées élastiquement progressivement entre lesdits plateaux.

Ce serrage progressif est dû ici en majeure partie aux pales tripodes 771 et plus particulièrement grâce à leurs zones périphériques de portée 723 et au pied 724.

Ces pales 771 ont une forme de tripode avec trois zones planes de portée ou d'appui respectivement 723 et 722.

La zone plane centrale 722 est en contact avec la garniture de frottement 132 associée au plateau de pression et sert à la fixation de ladite garniture 132. Cette zone 722 se rétrécit en direction de la périphérie externe du disque porte-garnitures. Elle est donc plus large à sa périphérie interne.

Plus précisément le disque porte-garnitures avec ses garnitures 131,132 appartient ici à un disque de friction comportant deux parties coaxiales montées mobiles l'une par rapport à l'autre à l'encontre d'organes élastiques à action circonférentielle 5 et de moyens de frottement 20 à action axiale.

Un tel disque est décrit par exemple dans la demande EP-A-0 579 554, ainsi que dans le brevet US-5,014,842 auquel on pourra se reporter.

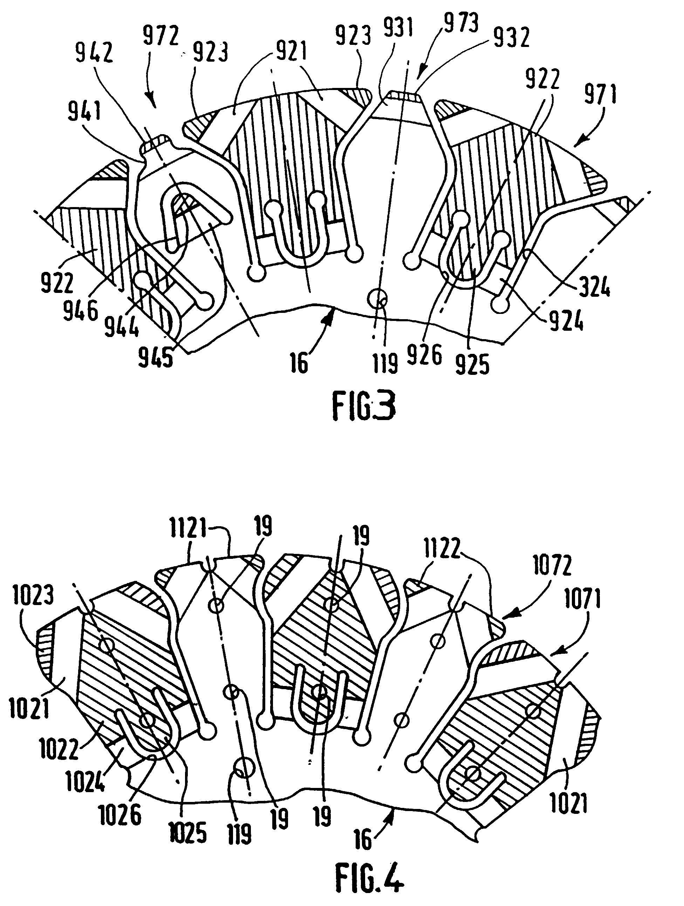

Ici l'une des parties comporte deux rondelles de guidage 1,2 et le disque porte-garnitures, tandis que l'autre partie coaxiale comporte un voile 4 solidaire en rotation d'un moyeu 3, par sertissage (non représenté) , ou ici par intervention de moyens d'engrènement à jeu visibles notamment à la figure 3 du brevet US-5,014,842.

Ainsi ces moyens comportent des dentures de forme trapézoïdale formées à la périphérie externe du moyeu 3 et à la périphérie interne du voile 4, lesdites dentures engrenant à jeu.

Des ressorts de faible raideur, non visibles, s'appuient à chacune de leur extrémité sur des coupelles montées dans des échancrures du moyeu 3 et du voile 4 pour accouplement élastique entre lesdites pièces.

On peut inverser les structures, le disque porte-garnitures étant alors solidaire du voile 4 mobile en rotation par rapport au moyeu 3, tandis que les rondelles de guidage sont alors solidaires du moyeu 3.

De même le disque porte-garnitures peut être solidaire du voile 4, lui-même solidaire du moyeu 3, le disque de friction étant alors du type rigide comme visible dans le document EP-A-0 579 554.

Ici le disque porte-garnitures est accolé par sa partie centrale 16 à la rondelle de guidage 1 et est solidarisé à celle-ci à l'aide de colonnettes traversant à jeu des ouvertures 7 pratiquées dans le voile 4.

Ces colonnettes 8 solidarisent entre elles les rondelles 1,2 disposées de part et d'autre du voile 4.

Les organes élastiques 5 consistent ici en des ressorts à boudin montés ici par paire dans des fenêtres en vis-à-vis pratiquées dans les rondelles de guidage 1,2 et dans le voile 4 de manière connue en soi.

Les moyens de frottement 20 comportent une rondelle de frottement interposée axialement entre le voile 4 et la rondelle 1, ainsi qu'une rondelle d'application calée en rotation sur la rondelle de guidage 2 à l'aide de pattes axiales engagées dans des ouvertures de ladite rondelle 2.

Un ressort prend appui sur la rondelle 2 et sollicite la rondelle d'application en contact du voile 4.

Les zones 723 s'étendent à la périphérie externe des pales 771 de part et d'autre de la zone centrale 722. Elles ont une forme globalement triangulaire et sont raccordées à la zone 722 par des plis obliques 721 par rapport à l'axe radial de symétrie de la pale 771. Ces plis 721 sont inclinés axialement et s'étendent de manière symétrique par rapport audit axe radial.

Les zones 723 et 722 sont ainsi, grâce aux plis 721, décalées axialement en étant parallèles entre elles. Plus précisément les zones 723 sont propres à venir en contact avec la garniture de frottement 131 associée au plateau de réaction de l'embrayage. Ici elles s'étendent dans le plan de la partie centrale 16.

La zone centrale 722 se raccorde à la partie centrale 16 par un pli d'orientation tangentielle 724 ou pli longitudinal perpendiculaire ici à l'axe de symétrie radial de la pale. Ce pli 724, oblique axialement, forme le pied de la pale et permet un décalage axial de la zone 722 par rapport à la partie centrale 16. Le pli 724 s'étend ici de manière symétrique par rapport audit axe radial.

Ainsi lors de l'écrasement des garnitures 131,132 les zones 723 se déforment axialement. On notera que les plis 724 sont d'une grande largeur et donc très robustes. Des fentes verticales 224 séparent les pales 771 des languettes 772. Ces fentes débouchent à la périphérie externe du disque porte-garnitures et ont une extrémité interne fermée, de forme circulaire, pour raccordement aux plis 724 et à la partie centrale 16.

Les pales 771 cambrées ont une étendue circonférentielle réduite par rapport à celle du document EF-A-0 579 554, en sorte que les languettes 772 ont une largeur circonférentielle voisine de celle des pales 771 suivant une caractéristique de l'invention. Les portées d'appui pour chaque garniture sont ainsi les plus proches possible.

Ceci est réalisé dans le but de conserver le maximum d'appui pour les garnitures de frottement 131,132 avec des distances entre appui les plus faibles possible.

Il y a ainsi multiplication du nombre de pales. Ici le disque de friction ayant une grande taille, il s'agit d'implanter par exemple au moins deux rangées d'organes de fixation 47, tels que les rivets précités, des vis ou des boulons, pour fixer les garnitures de frottement 131,132 et donc de doter au moins certaines pales 771 d'au moins deux trous de passage 19 pour lesdits organes de fixation.

En variante on peut prévoir une seule rangée de rivet et un collage, ou uniquement un collage. Dans tous les cas le disque de friction doit avoir une meilleure tenue aux effets de la force centrifuge.

Ainsi suivant l'invention, un disque porte-garnitures du type sus-indiqué est caractérisé en ce que la zone centrale 722 d'au moins certaines pales tripodes 771 est prolongée centralement (en 725) radialement vers l'intérieur à la faveur d'une découpe 726 affectant le pli longitudinal 724. Dans les figures 1 et 2 ledit prolongement 725 est doté d'un trou 19 supplémentaire pour le passage d'un organe de fixation 47, ici d'un rivet 47. La surface d'appui pour la garniture 132 est ainsi augmentée et la fixation de la garniture 132 est plus robuste.

Comme visible à la figure 2, un autre trou de passage 19 est implanté à la périphérie externe de la zone centrale 722 et de la pale 771.

Ainsi les trous 19 pour la fixaton de la garniture 132, situés dans le même plan, sont séparés radialement d'une distance notable et sont ici implantés radialement sur l'axe de symétrie de la pale 771.

Suivant une caractéristique, les languettes 772 sont à l'image des pales 771 et comportent donc ici une zone centrale 823, dans le plan de la partie centrale 16, et deux zones périphériques de portée 822 de part et d'autre de ladite zone centrale 823.

Un pli 821, oblique axialement et incliné radialement, raccorde chaque zone 822 à la partie périphérique de la zone centrale 823. Les zones 822 sont décalées axialement en direction des zones centrales 722 des pales 771. Elle peuvent être dans le plan de celles-ci ou légèrement en retrait axialement

Deux trous de passage 19 dans le même plan sont prévus dans la zone centrale 823. Ces trous 19 sont radialement alignés sur l'axe de symétrie radial de la languette 772, en étant implantés sur les mêmes circonférences que les trous 19 des pales 771.

Pour certaines languettes 772, ces trous sont alignés avec un trou de passage 119 pour la fixation, à la figure 1 par rivetage, de la partie centrale 16 au voile 4 rapporté lui-même par rivetage sur une bride du moyeu 3.

Bien entendu en variante, représenté en pointillés à la figure 2, les languettes 772 pourraient être remplacées par une seconde série de pales tripodes cambrées, de forme analogue aux pales 771, avec un pli longitudinal raccordant la zone centrale à la partie centrale 16 du disque porte-garnitures.

Ici la découpe 726 selon l'invention a une forme de V à fond arrondi, la pointe du V étant dirigée vers l'axe du disque de friction (vers l'axe de la partie centrale 16). Le prolongement 725 a donc la forme d'un V arrondi. Il constitue une patte d'appui supplémentaire orientée globalement radialement vers l'intérieur comme dans les autres figures illustrées ci-après.

Cette découpe affecte le pli 724 ainsi que localement une faible partie la zone centrale 722 et la partie centrale 16. Le pli 724 est donc dédoublé, ce qui améliore le serrage progressif précité. Ce pli 724 a une bonne tenue mécanique malgré la découpe selon l'invention.

On notera que le prolongement 725 a une zone d'enracinement, à la zone centrale 722, évasée.

Grâce à cette zone d'enracinement les amorces de rupture sont réduites.

L'axe radial de symétrie de la découpe 726 est confondu avec l'axe radial de symétrie de la pale 771.

On appréciera que le bon équilibre du disque de friction et la bonne planéité de ses garnitures de frottement notamment dus à la répartition régulière des trous de fixation 19 et à leur position sur l'axe de symétrie des languettes 772 et des pales 771.

On notera également la simplicité de fabrication grâce au déplacement radial possible de l'outil de découpe permettant la fabrication de disques avec des pales et des languettes de hauteur différente.

Ici en position embrayage engagé (garnitures 131,132 serrées) un espace existe entre les deux garnitures 131,132, en sorte que les pales 771 ne sont pas totalement écrasées pour permettre auxdites garnitures de s'adapter à la forme des plateaux de pression et de réaction.

Bien entendu les pales tripodes peuvent avoir une autre forme telle celle décrite dans le susmentionné document EP-A-0 579 554.

Ainsi, à la figure 3, la pale tripode 971 présente une zone centrale de portée 922, rétrécie à sa périphérie externe et décalée axialement par rapport à la partie centrale 16 à la faveur des plis obliques 921 par rapport à l'axe de symétrie radial de la pale et au pli longitudinal 924 perpendiculaire audit axe de symétrie.

La zone centrale 922, comme à la figure 2, est prolongée centralement, radialement vers l'intérieure à la faveur d'une découpe 926 centrale en forme de U affectant le pli longitudinal 924. Ce prolongement a globalement la forme d'une languette ou pattes 925 avec une zone d'enracinement à la zone centrale 922 rétrécie, les extrémités verticales de la découpe 926 débouchant dans des trous circulaires pratiqués dans la zone 922 affectée par la découpe 926.

La patte 925 est donc dirigée vers l'axe de l'ensemble et présente une extrémité libre arrondie.

Les zones de portée périphériques 923 sont globalement dans le plan de la partie 16. Ces zones 923 font saillies circonférentiellement par rapport à la zone centrale 922, en sorte que les pales 971 ont globalement la forme d'un T.

On profite de cette forme pour élargir circonférenciellement les languettes 972,973 radialement dans leur zone médiane. Ainsi, ces languettes 972,973 sont plus larges radialement centralement qu'à leurs extrémités libres et qu'à leurs zones de raccordement avec la partie 16.

Ici les languettes radiales 972 et 973 ont une configuration différente. Ces languettes alternent circonférentiellement avec les pales 971, et ce d'une manière régulière. L'extrémité libre de la languette 972 est rétrécie circonférentiellement et présente une zone de portée supplémentaire 942, raccordée à la partie principale de la languette par un pli de raccordement 941, présentant, pour une bonne souplesse, une largeur constante au niveau de la zone 942, décalée axialement en direction de la zone centrale de portée 922 des pales 971. Ce pli 941 s'élargit à sa base. Ici, la zone supplémentaire 942 est dans le plan de la zone 922 de la pale 971. Bien entendu, ladite zone 942 peut être légèrement en retrait par rapport à la zone 922.

La languette 973 présente à son extrémité libre une zone 932 raccordée par un pli 931 à la zone principale de la languette 973.

Le pli 931 et la zone 932, ici dans le plan de la zone centrale 922, ont une forme trapézoïdale.

Ainsi qu'on l'aura compris, grâce aux deux jeux de languettes, il est possible d'avoir un décalage axial entre les zones 942 et les zone 932 en sorte qu'on a un bon soutien des garnitures lors de l'engagement de l'embrayage.

Ici, la partie centrale 16 présente des trous de passage 119 pour la fixation de la partie centrale 16 à la rondelle de guidage 1 ou au voile 4 selon les cas.

On notera que la découpe 926 affecte centralement le pli 924 qui est ainsi dédoublé ce qui améliore le serrage progressif de la pale 971. Ce pli a une bonne tenue mécanique malgré la découpe.

On notera que les fentes 324 séparant les languettes radiales 972,973 des pales 971, ont une forme tortueuse due à l'élargissement central desdites languettes.

Ici des garnitures 131 et 132 sont fixées directement par collage sur les languettes 972,973 et la partie principale des languettes 972,973 et sur les zones centrales 922 des pales 971. On notera que le prolongement souple 925 favorise le collage.

Grâce à toutes ces dispositions, on peut réduire l'épaisseur des garnitures 131, 132.

Ainsi, lesdites garnitures 131,132 ont juste l'épaisseur requise, car il n'y a pas besoin de prévoir de surépaisseur pour les rivets 47 comme dans le mode de réalisation des figures 1 et 2.

Ainsi l'inertie du disque de friction est diminuée, ce qui est favorable pour ménager, lors du désengagement de l'embrayage, les engrenages que présentent la boîte de vitesse sur l'arbre d'entrée sur lequel est calé le moyeu 3.

En outre, les pales et les languettes sont rigidifiés, puisqu'ils ne présentent pas de trous pour le passage des rivets.

Ainsi, on peut en profiter pour créer, par exemple dans la languette 972 une zone de portée supplémentaire 944, décalée axialement en direction de la zone 922 et ce à la faveur d'un pli 945 raccordant ladite zone 944 à la partie principale à la languette 972 dans le plan de la partie 16.

La création de cette zone supplémentaire est réalisée à la faveur d'une découpe 946, globalement en forme de V, dirigée radialement vers l'extérieur, contrairement à la découpe 926.

Ainsi, il est formé une languette ou patte 944,945 dirigée radialement vers l'extérieur, en s'étendant de manière symétrique par rapport à l'axe de symétrie radial de la languette 972.

Bien entendu, la création de la zone de portée supplémentaire 925 permet également la création d'un trou supplémentaire pour la fixation par rivetage de la garniture 132 comme à la figure 2.

Ainsi, à la figure 4 chaque languette 1072 et chaque pale tripode 1071 présentent deux trous 19 pour le passage des organes de fixation des garnitures 131,132.

Ces trous 19 sont radialement alignés sur l'axe de symétrie radial des languettes radiales 1072 et des pales 1071.

L'un des trous 19 est implanté à la faveur de la zone du prolongement 1025 de la zone centrale délimité par une découpe 1026 en forme de U affectant centralement le pli longitudinal 1024 de la pale 1071. Le prolongement 1025, en forme de languette ou patte, est dans le plan de la zone centrale de portée 1022 de la pale 1071, la zone 1022 étant décalée axialement par rapport à la zone centrale 16 grâce aux plis 1024 et aux plis 1021 obliques par rapport à l'axe de symétrie radial de la pale 1071.

Les plis 1021 se raccordent aux zones de portée périphériques 1023 globalement parallèles aux plis 1021.

Les zones 1023 sont globalement dans le plan de la zone 16.

Les languettes 1072 ont une forme semblable aux pales 1071 à la seule différence que leur partie principale est dans le plan de la zone centrale 16.

Les languettes 1072 radiales présentent donc à leur périphérie externe deux zones de portée périphériques supplémentaires 1122, globalement dans le plan de la zone centrale 1022 des pales 1071.

Ces zones 1122 se raccordent par des plis 1121 obliques par rapport à l'axe de symétrie radial de la languette 1072 à la zone principale de ladite languette.

Ici, les pales 1071 présentent un renflement à leur périphérie externe et les languettes 1072 sont élargies circonférentiellement à leur périphérie externe.

Bien entendu, les languettes et les pales tripodes peuvent être distinctes les unes des autres en étant rapportées, par exemple, par des trous 229 à la rondelle 1 ou au voile 4.

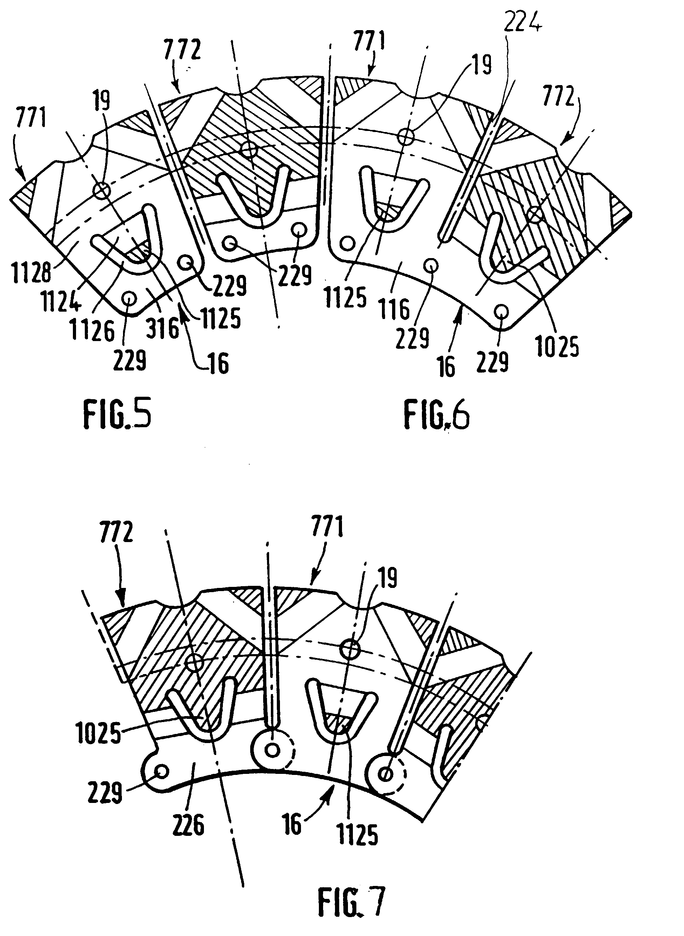

Ainsi, à la figure 5 les pales tripodes 772 alternent circonférentiellement avec les languettes 771 radiales ayant une forme semblable à celles des pales 772, comme explicité à la figure 2.

Ainsi, la périphérie interne 316 de la languette 771 présente deux trous 229 pour passage des organes de fixation, tels que des rivets, à la rondelle 1 par exemple.

Ici la languette 771 présente dans sa partie centrale une zone de portée supplémentaire 1125.

Cette zone 1125 est dans le plan de la zone centrale de la pale 772 et est raccordée par un pli 1124 de la partie principale 1128 de la languette 771.

Tout ceci est réalisé grâce à la découpe 1126 globalement en forme de V.

Le pli 1124 avec la zone de portée 1125 effilée forme globalement une languette ou patte dirigée vers l'axe de l'ensemble contrairement au mode de réalisation de la figure 3.

La languette 772 est prolongée radialement au-delà de son pli longitudinal vers l'axe de l'ensemble pour sa fixation à la rondelle, à l'aide de trous 229 permettant le passage des organes de fixation.

Bien entendu, figure 6, languette 771 et la pale 772 peuvent être reliées ensembles à leur base.

Dans ce cas, chaque pale 771 est d'un seul tenant avec une bande de matière 116 globalement en forme de secteur annulaire.

La bande 116 relie une pale 771 à une languette 772 et comporte trois trous de fixation 229 pour sa fixation à la rondelle 1 ou au voile 4, ici par rivetage.

Dans ces figures 5 et 6 les pales 772 et les languettes 771 sont à l'image l'une de l'autre, car leur zone centrale présente une patte 1025,1124,1125 globalement en forme de V dirigée vers l'axe de l'ensemble.

La patte 1025 affecte le pli longitudinal de la languette 772 comme explicité ci-dessus. On peut fixer par collage et rivetage (à l'aide des trous 19) les garnitures 131, 132, la patte 1025 permettant un tel collage.

Bien entendu (figure 7), on peut fractionner la partie centrale en bandes 226 avec des oreilles à chacune de leurs extrémités circonférentielles. Les oreilles sont dotées de trous 229 et se recouvrent d'une languette à une pale 772 consécutive.

Les bandes 226 sont fixées ici à la rondelle 1 par rivetage à la faveur des trous 229.

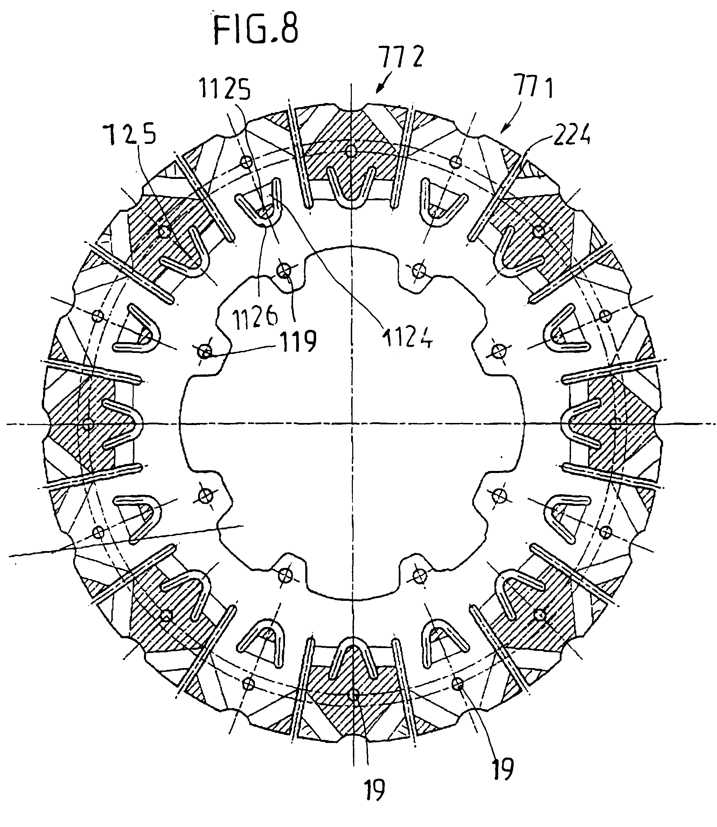

Bien entendu (figure 8) les pales 771 et les languettes 772 peut être d'un seul tenant comme à la figure 2 avec, comme dans les figures 5 à 7, implantation des trous 19 pour les pales 772 sur une circonférence de diamètre différent (inférieure) à celle sur laquelle sont implantés les trous 19 associés aux languettes 771, les trous 119 étant pratiqués à la faveur de languettes.

Bien entendu, comme dans les figures 5 à 7, on peut fixer par collage et rivetage les garnitures, le collage remplaçant la deuxième série de rivets. Les languettes 771 peuvent consister en des pales tripodes aec une patte 1025.

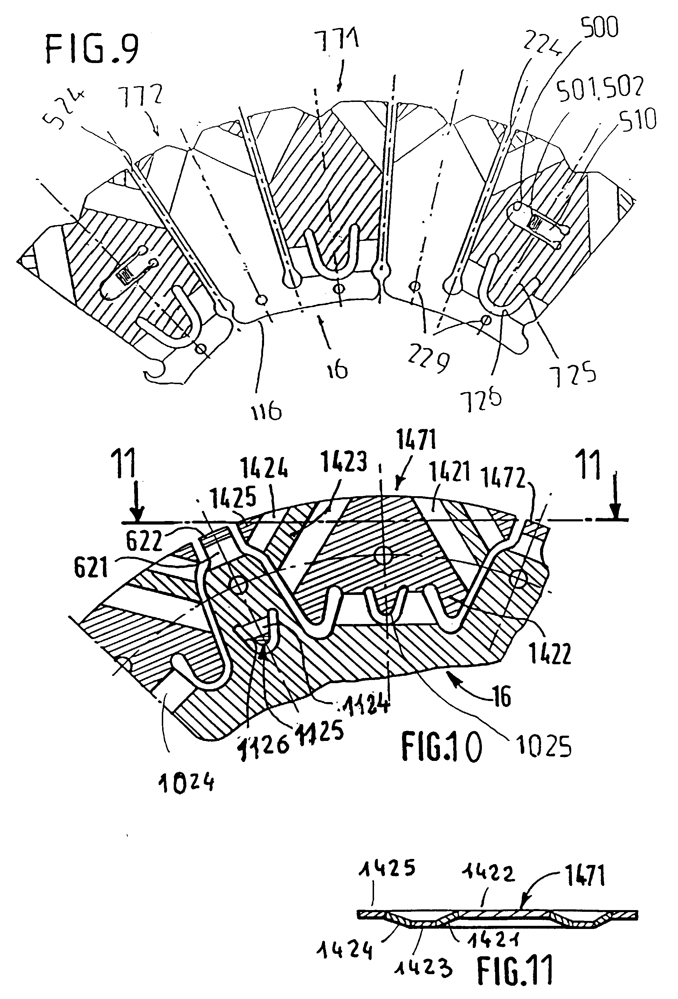

A la figure 9, le disque porte-garnitures comporte deux disques de support accolés comportant chacun des pales du type tripode. Ces pales ont une forme analogue à celle de la figure 6 et sont donc fixées chacune à la faveur des trous 229 sur le disque de support concerné.

Ces disques de support sont accolés et sont fixés l'un avec l'autre à la faveur des colonnettes 8 de la figure 1 et ce en même temps que la rondelle de guidage 1.

Il y a ainsi alternance de pales tripodes 771 et de languettes 772 séparées par des fentes 524,224. Les pales tripodes sont montées dos-à-dos, la garniture de frottement 131,132 étant fixée par collage aux zones centrales des pales tripodes 771.

Ainsi l'une des garnitures de frottement est fixée par collage sur les zones centrales de portée de l'une des séries de pales tripodes, tandis que l'autre garniture est fixée par collage sur les zones centrales de l'autre des séries des pales tripodes.

Des moyens d'accouplement 501,502 à action axiale unidirectionnels propres à limiter l'écartement axial entre les deux disques de support interviennent entre ceux-ci.

Lesdits moyens d'écartement sont implantés au niveau de certaines des zones centrales de portées des pales tripodes 771.

Ainsi il y a alternance ici de manière régulière de pales tripodes 771 analogues à celle de la figure 2 et de pales tripodes dotées de moyens d'accouplement. Ces moyens d'accouplement comportent des crochets 501, 502. Les crochets comportent une patte 501,502 s'étendant longitudinalement de manière parallèle à la zone centrale de portée du disque de support concerné.

La patte 501,502 se raccorde à la zone centrale de portée par un pli 510. Les pattes sont formées à la faveur d'une découpe 500 en forme de trou oblongue pratiqué dans la zone centrale de portée.

Ainsi le crochet porté par l'un des disques est propre à venir en butée avec une surface de butée associée portée par l'autre disque. Cet autre disque porte une patte 502 à l'image de la patte 501.

Il est donc créé un crochet 501,502,510 qui s'étend en majeure partie d'un côté de l'axe de symétrie radial de la pale tripode, seule la patte 501,502 s'étend de part et d'autre dudit axe pour coopérer avec la patte associée de l'autre disque.

Ainsi la patte 501,502 s'étend parallèlement à la zone centrale de portée en étant décalée axialement en direction de la garniture de frottement opposée à celle fixée sur la zone centrale de la pale tripode concernée.

Ainsi qu'on l'aura compris, l'un des disques comporte au moins une patte 501,502 s'étendant d'un bord de la zone centrale de portée en direction de l'autre bord de ladite zone centrale de portée et vice versa pour l'autre disque.

Il est ainsi possible de faire un montage du type baïonnette. Par exemple la patte 501 de l'un des disques est introduite dans l'ouverture 500 de l'autre disque, puis est tournée circonférentiellement pour venir en prise avec la patte associée 502 de l'autre disque.

Bien entendu la découpe 500 est dimensionnée en conséquence.

On forme ainsi aisément un sous-ensemble comportant les deux disques avec leurs pales 771 et languettes 772 et les garnitures 131,132, l'écartement axial étant limité par coopération des pattes 501,502.

Ce sous-ensemble est ensuite monté sur les rondelles de guidage 1,2 à l'aide des colonnettes 8.

Les pattes 501,502 sont en prise l'une avec l'autre lorsque l'embrayage est désengagé, l'écartement axial entre les pales tripodes est ainsi limité.

Les pattes 501,502 sont globalement, lorsque l'embrayage est désengagé, dans le même plan que les zones de portées périphériques des pales tripodes, elles-mêmes globalement dans le même plan que les disques.

On appréciera que les garnitures de frottement 131,132 sont collées sur une grande zone de portée.

Bien entendu (figures 10 et 11), on peut créer des zones de portée périphériques supplémentaires 1425 dans les pales tripodes 1471 à la faveur des zones de portée périphériques de ladite pale.

Les zones de portée 1425 s'étendent dans le plan de la zone centrale 1422. Plus précisément, la zone centrale 1422 est raccordée par un pli oblique 1421 à une zone de portée périphérique 1423 dans le plan de la partie principale de la languette 1472.

Cette zone 1423 se raccorde par un pli oblique 1424 par rapport à l'axe de symétrie radial de la pale 1471 à la zone de portée supplémentaire 1425. Cette zone 1425 est dans le plan de la zone supplémentaire 622, que présente la languette 1472. La zone 622 est formée à l'extrémité libre de la languette 1472 et a globalement une forme rectangulaire. Elle est raccordée à la partie principale de la languette 1472 par un pli 621 analogue aux plis 941 et 931 de la figure 3.

Cette languette 1472 présente également comme dans les figure 5 à 8 une zone de portée supplémentaire 1125 raccordée par un pli 1124 à la partie principale de la languette 671.

Tout ceci est formé à la faveur d'une découpe 1426 globalement en forme de V. Ainsi la zone 1125 est dans le plan de la zone centrale 1422.

On obtient grâce à toutes ces zones supplémentaires, formant des zones de stabilisation, une bonne stabilité des garnitures de frottement favorable à une réduction des usures. Ces garnitures sont bien soutenues.

Bien entendu, on peut fixer uniquement par collage les garnitures de frottement 131,132 aux languettes et aux pales 771,772.

Bien entendu, la présente invention n'est pas limitée à l'exemple de réalisation décrit.

Les garnitures de frottement 131,132 peuvent être fractionnées. En variante, chaque garniture peut comporter une couronne de support continue et ajourée pour fixation de plots de frottement comme décrit dans le susmentionné document EP-A-0 579 554.

Les plis tangentiels peuvent ne pas constituer à eux seuls le pied des pales, un bout des pieds raccordant les plis à la partie centrale du disque.

Bien entendu, selon les applications on peut supprimer les zones de portées pratiquées à la périphérie externe des languettes radiales. Par exemple à la figure 3, on peut supprimer le pli 941 et la zone 942 et conserver la zone 944 et la découpe 946.

On peut créer également deux découpes dirigées radialement en sens inverse et délimitant un pli de raccordement portant une zone de portée supplémentaire.

Toutes les combinaisons sont possibles.

On appréciera que dans les figures 5 à 8 les trois zones de portées supplémentaires à savoir la partie 1125 et les deux zones de portées périphériques des languettes 771 sont réparties judicieusement de manière triangulaire ce qui est très favorable pour la stabilité et la réduction des usures des garnitures 131,132.

Bien entendu, les plis obliques raccordant les zones périphériques de portée à la zone centrale peuvent ne pas être symétriques par rapport à l'axe de symétrie radial de la pale. Il en est donc de même de la zone centrale.

Les zones de portée supplémentaires ne sont pas forcement disposées sur l'axe de symétrie radial de la languette. Un léger décalage peut exister.

D'une manière générale, on notera que dans les figures 3 à 8 et 10 à 11, les languettes offrent au moins une zone de portée supplémentaire.

Ainsi lors de l'écrasement des garnitures 131,132 la ou les zones respectivement 932-822-1122 sont propres à venir en contact avec la garniture 132 pour offrir ainsi une réaction. Lesdites zones constituent donc des zones de stabilisation s'étendant ici dans le plan de la zone centrale 722 grâce aux plis précités 931-821-1131.

En variante ces zones peuvent être légèrement en retrait par rapport aux zones centrales. Ainsi la garniture 131 reste bien plane.

Ainsi on obtient un disque porte-garnitures avec à sa périphérie externe de grandes zones de portée réduisant les phénomènes d'incrustation et de broutement car les garnitures de frottement 131,32 restent dans un plan bien parallèle. Le disque porte-garnitures et donc le disque de friction peuvent ainsi tourner à grande vitesse tout en suivant le mouvement de mise en cône des plateaux de pression et de réaction. Les usures des garnitures sont encore mieux réparties.

On appréciera que les plis 724-924-1024-931-921-821-1121-1021 donnent une bonne stabilité au disque porte-garnitures, ce qui permet d'avoir un bon contact des garnitures de frottement avec les plateaux de pression et de réaction, ce qui réduit les usures des garnitures de frottement.

On appréciera que le bon équilibre du disque de friction et la bonne planéité de ses garnitures de frottement notamment dus à la répartition régulière des trous de fixation 19 et à leur position sur l'axe de symétrie des languettes et des pales tripodes.

Ici en position embrayage engagé (garnitures 131,132 serrées) un espace existe entre les deux garnitures 131,132, en sorte que les pales ne sont pas totalement écrasées pour permettre auxdites garnitures de s'adapter à la forme des plateaux de pression et de réaction.

On notera, dans les figures 10 et 11, que la zone centrale de portée 1422 comporte à sa périphérie interne deux pattes disposées de part et d'autre du pli longitudinal 1024. Ces pattes permettent d'accroître la zone de portée de la zone 1422 en association avec la patte 1025.

Il est ainsi possible de coller la garniture de frottement 132 sur ladite zone 1422.

Dans tous les cas les prolongements, globalement en forme de pattes 725-925-1025 souples selon l'invention, permettent une fixation par collage de la garniture de frottement concernée.

Lesdites pattes souples étant alors enduites de colle.

## Revendications

1. Disque porte-garnitures propre à la constitution d'un disque de friction, notamment pour véhicule automobile, du genre comportant au moins une partie centrale (16) et une partie périphérique fractionnée en au moins une série de pales radiales du type tripode (771-971-1071-1471), dans lequel lesdites pales présentent, à la faveur de plis (721-921-1121-1421), une zone centrale plane de portée (722-922-1022-1422) et deux zones planes périphériques de portée (723-923-1023-1423) à sa périphérie externe de part et d'autre de ladite zone centrale, lesdites zones périphériques étant décalées axialement par rapport à ladite zone centrale, et dans lequel ladite zone centrale de portée se raccorde à la partie centrale (16) du disque porte-garnitures par un pied comportant une zone inclinée, sous forme d'un pli longitudinal (724-924-l024) perpendiculaire à l'axe de symétrie radial d'une dite pale, caractérisé en ce que la zone centrale (722-922-1022-1422) d'au moins certaines pales tripodes (771-971-1071-1471) est prolongée centralement (en 725-925-1025) radialement vers l'intérieur à la faveur d'une découpe (726-926-1026) affectant le pli longitudinal (724-924-1024).

2. Disque porte-garnitures selon la revendication 1, caractérisé en ce que lesdits prolongements (725-925-1025) sont en forme de pattes s'étendant globalement radialement.

3. Disque porte-garnitures selon la revendication 1 ou 2, caractérisé en ce que les découpes (726-926-1026) affectent localement ladite zone centrale (722-922-1022-1422).

4. Disque porte-garnitures selon la revendication 3, caractérisé en ce que les découpes (726) ont globalement la forme d'un V à fond arrondi, la pointe du V étant dirigée vers l'axe de la partie centrale (16).

5. Disque porte-garnitures selon la revendication 3, caractérisé en ce que les découpes (926-1026) ont une forme de U, dont le fond est dirigé vers l'axe de la partie centrale (16).

6. Disque porte-garnitures selon la revendication 5, caractérisé en ce que le prolongement (925) a la forme d'un U avec une zone d'enracinement, à ladite zone centrale, rétrécie.

7. Disque porte-garnitures selon la revendication 1, caractérisé en ce que l'axe radial de symétrie des découpes (726-926-1026) est confondu avec l'axe de symétrie radial des pales tripodes (771-971-1071-1471).

8. Disque porte-garnitures selon la revendication 1, caractérisé en ce que les pales tripodes (771-1071) alternent circonférentiellement avec des languettes (772-1072) à l'image desdites pales, en sorte que lesdites languettes présentent une zone centrale (823-1023) dans le plan de la partie centrale (16) et deux zones périphériques de portée (822-1122) de part et d'autre de ladite zone centrale (823-1023).

9. Disque porte-garnitures selon la revendication 1, caractérisé en ce que lesdites pales tripodes alternent circonférentiellement avec des languettes (972-973-1472) présentant à la faveur d'un pli de raccordement (931-941-621), une zone de portée (932-942-944-1125) décalée axialement en direction desdites zones centrales des pales tripodes (971-1471) associées.

10. Disque porte-garnitures selon la revendication 1, dans lequel ladite zone centrale de portée des pales tripodes (771-1071) comporte au moins un trou (19) pour le passage d'un organe de fixation (47), caractérisé en ce que ledit prolongement (725-925-1025) est doté d'un trou supplémentaire (19) pour le passage d'un organe de fixation.

11. Disque porte-garnitures selon la revendication 1, caractérisé en ce que ledit prolongement (725-925-1025) est enduit de colle.

## Patentansprüche

1. Reibbeläge tragende Scheibe zur Bildung einer Reibungskupplungsscheibe, insbesondere für Kraftfahrzeuge, umfassend zumindest einen Mittelteil (16) und einen Umfangsteil, der in mindestens eine Reihe Von radialen Segmenten mit drei Auflagestellen (771-971-1071-1471) unterteilt ist, wobei die besagten Segmente anhand von Biegungen (721-921-1121-1421) einen ebenen mittleren Auflagebereich (722-922-1022-1422) und zwei ebene Umfangsauflagebereiche (723-923-1023-1423) an ihrem Außenrand beiderseits des besagten mittleren Auflagebereichs aufweisen, wobei die besagten Umfangsauflagebereiche axial im Verhältnis zu dem besagten mittleren Auflagebereich versetzt sind und wobei sich der besagte mittlere Auflagebereich an den Mittelteil (16) der die Reibbeläge tragenden Scheibe über einen Fuß mit einem geneigten Bereich in Form einer Längsbiegung (724-924-1024) anschließt, die senkrecht zur radialen Symmetrieachse eines der besagten Segmente verläuft, **dadurch gekennzeichnet**, daß der mittlere Auflagebereich (722-922-1022-1422) wenigstens einiger Segmente mit drei Auflagestellen (771-971-1071-1471) mittig (bei 725-925-1025) radial nach innen mittels eines Einschnitts (726-926-1026) verlängert wird, der auf die Längsbiegung (724-924-1024) übergreift.

2. Reibbeläge tragende Scheibe nach Anspruch 1, **dadurch gekennzeichnet**, daß die besagten Verlängerungen (725-925-1025) in Form von Ansätzen ausgebildet sind, die sich insgesamt radial erstrecken.

3. Reibbeläge tragende Scheibe nach Anspruch 1 oder 2, **dadurch gekennzeichnet**, daß die Einschnitte (726-926-1026) örtlich auf den besagten mittleren Auflagebereich (722-922-1022-1422) übergreifen.

4. Reibbeläge tragende Scheibe nach Anspruch 3, **dadurch gekennzeichnet**, daß die Einschnitte (726) insgesamt die Form eines V mit abgerundetem Boden aufweisen, wobei die Spitze des V zur Achse des Mittelteils (16) gerichtet ist.

5. Reibbeläge tragende Scheibe nach Anspruch 3, **dadurch gekennzeichnet**, daß die Einschnitte (926-1026) die Form eines U aufweisen, dessen Boden zur Achse des Mittelteils (16) gerichtet ist.

6. Reibbeläge tragende Scheibe nach Anspruch 5, **dadurch gekennzeichnet**, daß die Verlängerung (925) die Form eines U mit einem verengten Übergangsbereich zu dem besagten mittleren Auflagebereich aufweist.

7. Reibbeläge tragende Scheibe nach Anspruch 1, **dadurch gekennzeichnet**, daß die radiale Symmetrieachse der Einschnitte (726-926-1026) mit der radialen Symmetrieachse der Segmente mit drei Auflagestellen (771-971-1071-1471) zusammenfällt.

8. Reibbeläge tragende Scheibe nach Anspruch 1, **dadurch gekennzeichnet**, daß sich die Segmente mit drei Auflagestellen (771-1071) umfangsmäßig mit Zungen (772-1072) in Entsprechung zu den besagten Segmenten abwechseln, so daß die besagten Zungen einen mittleren Auflagebereich (823-1023) in der Ebene des Mittelteils (16) und zwei Umfangsauflagebereiche (822-1122) beiderseits des besagten mittleren Bereichs (823-1023) aufweisen.

9. Reibbeläge tragende Scheibe nach Anspruch 1, **dadurch gekennzeichnet**, daß sich die besagten Segmente mit drei Auflagestellen umfangsmäßig mit Zungen (972-973-1472) abwechseln, die mittels einer Anschlußbiegung (931-941-621) einen Auflagebereich (932-942-944-1125) aufweisen, der axial in Richtung der besagten mittleren Bereiche der zugehörigen Segmente mit drei Auflagestellen (971-1471) versetzt ist.

10. Reibbeläge tragende Scheibe nach Anspruch 1, wobei der besagte mittlere Auflagebereich der Segmente mit drei Auflagestellen (771-1071) mindestens ein Loch (19) für den Durchgang eines Befestigungsorgans (47) enthält, **dadurch gekennzeichnet**, daß die besagte Verlängerung (725-925-1025) mit einem zusätzlichen Loch (19) für den Durchgang eines Befestigungsorgans versehen ist.

11. Reibbeläge tragende Scheibe nach Anspruch 1, **dadurch gekennzeichnet**, daß die besagte Verlängerung (725-925-1025) mit Klebstoff bestrichen ist.

## Claims

1. Lining-holder disc suitable for constituting a friction disc, notably for a motor vehicle, of the kind having at least one central portion (16) and a peripheral portion divided into at least one series of radial blades (771-971-1071-1471) of the tripod type, in which the said blades exhibit, by means of folds (721-921-1121-1421), a central plane support zone (722-922-1022-1422) and two peripheral plane support zones (723-923-1023-1423) at its outer periphery on either side of the said central zone, the said peripheral zones being offset axially with respect to the said central zone, and in which the said central support zone is joined to the central portion (16) of the lining-holder disc through a foot which has an inclined zone in the form of a longitudinal fold (724-924-1024) perpendicular to the radial axis of symmetry of a said blade, characterised in that the central zone (722-922-1022-1422) of at least some tripod blades (771-971-1071-1471) is extended centrally (at 725-925-1025) radially inwards by virtue of a cutout (726-926-1026) affecting the longitudinal fold (724-924-1024).

2. Lining-holder disc according to Claim 1, characterised in that the said extensions (725-925-1025) are in the form of lugs extending radially overall.

3. Lining-holder disc according to Claim 1 or Claim 2, characterised in that the cutouts (726-926-1026) affect the said central zone (722-922-1022-1422) locally.

4. Lining-holder disc according to Claim 3, characterised in that the cutouts (726) are V-shaped overall with a rounded base, with the tip of the V being directed towards the axis of the central portion (16).

5. Lining-holder disc according to Claim 3, characterised in that the cutouts (926-1026) are U-shaped, with the base thereof being directed towards the axis of the central portion (16).

6. Lining-holder disc according to Claim 5, characterised in that the extension (925) is U-shaped, with a narrowed root zone joining it to the said central zone.

7. Lining-holder disc according to Claim 1, characterised in that the radial axis of symmetry of the cutouts (726-926-1026) is coincident with the radial axis of symmetry of the tripod blades (771-971-1071-1471).

8. Lining-holder disc according to Claim 1, characterised in that the tripod blades (771-1071) alternate circumferentially with tongues (772-1072) in the image of the said blades, so that the said tongues have a central zone (823-1023) in the plane of the central portion (16) and two peripheral support zones (822-1122) on either side of the said central zone (823-1023).

9. Lining-holder disc according to Claim 1, characterised in that the said tripod blades alternate circumferentially with tongues (972-973-1472) exhibiting, by means of a connecting fold (931-941-621), a support zone (932-942-944-1125) which is offset axially in the direction of the said central zones of the associated tripod blades (971-1471).

10. Lining-holder disc according to Claim 1, in which the said central support zone of the tripod blades (771-1071) has at least one hole (19) for the passage of a fixing member (47), characterised in that the said extension (725-925-1025) is provided with an additional hole (19) for the passage of a fixing member.

11. Lining-holder disc according to Claim 1, characterised in that the said extension (725-925-1025) is coated with adhesive.
